Europäisches Patentamt

European Patent Office

Office européen des brevets

(19)

(11) Veröffentlichungsnummer: **0 200 016 B1**

(12) # EUROPÄISCHE PATENTSCHRIFT

(45) Veröffentlichungstag der Patentschrift: **21.10.92**

(51) Int. Cl.5: **H04B 3/54**, H04B 1/66

(21) Anmeldenummer: **86104438.6**

(22) Anmeldetag: **01.04.86**

(54) **Verfahren zur Übertragung von Information über elektrische Energieversorgungsnetze.**

(30) Priorität: **02.05.85 DE 3515663**

(43) Veröffentlichungstag der Anmeldung:
**05.11.86 Patentblatt 86/45**

(45) Bekanntmachung des Hinweises auf die
Patenterteilung:
**21.10.92 Patentblatt 92/43**

(84) Benannte Vertragsstaaten:
**AT CH DE FR GB IT LI NL SE**

(56) Entgegenhaltungen:
EP-A- 0 178 804      EP-A- 0 194 902
WO-A-83/03939      CH-A- 604 409
GB-A- 2 094 598      GB-A- 2 156 190

IEEE INTERNATIONAL CONFERENCE ON
COMMUNICATIONS ICC'82, Philadelphia,
13.-17. Juni 1982, Band 3, Seiten
6B.4.1-6B.4.3, IEEE, New York, US; G. NIYONI-
ZEYE et al.: "Address assignment in a multiple access FH-FSK system for mobile radio
communication"

(73) Patentinhaber: **ABB PATENT GmbH**
**Kallstadter Strasse 1**
**W-6800 Mannheim 31(DE)**

(72) Erfinder: **Baier, Paul Walter, Prof. Dr.-Ing.**
**Burgunderstrasse 6**
**W-6750 Kaiserslautern(DE)**
Erfinder: **Dostert, Klaus, Dr.-Ing.**
**Bergstrasse 3**
**W-6751 Krickenbach(DE)**
Erfinder: **Becker, Thomas, Dipl.-Ing.**
**Dresdener Strasse 64**
**W-6750 Kaiserslautern(DE)**

(74) Vertreter: **Rupprecht, Klaus, Dipl.-Ing. et al**
**c/o Asea Brown Boveri Aktiengesellschaft**
**Zentralbereich Patente Postfach 100351**
**W-6800 Mannheim 1(DE)**

INSTITUTE OF ELECTRICAL AND ELECTRO-
NICS ENGINEERS NATIONAL TELECOMMUNI-
CATIONS CONFERENCE, San Diego, 2.-4. Dezember 1974, Seiten 536-542, IEEE, New York,
US; J.J. MERKEL et al.: "Microcomputer application to a spread spectrum frequency
hopping modem"

1984 INTERNATIONAL ZURICH SEMINAR ON
DIGITAL COMMUNICATIONS, Zurich, 6.-8.
März 1984, Seiten 121-126; T. SCHAUB:
"Performance of an error correcting scheme
for data transmission over the power mains"

1985 IEEE INTERNATIONAL CONFERENCE ON
CONSUMER ELECTRONICS, Digest of Technical Papers, 5.-7. Juni 1985, Seiten 28-29,
IEEE, New York, US; B. HIROSAKI et al.: "A
power line home bus system using spreadspectrum communication technologies"

## Beschreibung

Die Erfindung betrifft ein Verfahren zur Übertragung von Information über die Leitungen eines Energieversorgungsnetzes mit Hilfe der Bandspreizungstechnik.

Das Informationsübertragungssystem dient der Übertragung von digitalen Nachrichten über die Leitungen eines Energieversorgungsnetzes. Das System soll resistent gegen die Störungen auf den Netzleitungen sein und die gleichzeitige Kommunikation vieler Teilnehmer ohne gegenseitige Störbeeinflussung ermöglichen, so daß Vielfachzugriff auf dasselbe Übertragungsfrequenzband gegeben ist.

Es ist bekannt, zur Nachrichtenübertragung über die Leitungen eines Energieversorgungsnetzes Systeme einzusetzen, die mit einer bestimmten festen Frequenz arbeiten, auf die die Nachricht in konventioneller Art schmalbandig aufmoduliert wird.

Allerdings können diese Systeme, die naturgemäß nur einen schmalen Übertragungskanal besitzen, durch Störer in genau diesem Frequenzbereich nachhaltig in ihrer Funktion beeinträchtigt werden; ebenso durch ungünstige Netzeigenschaften wie frequenzselektive starke Dämpfungen bei der verwendeten Frequenz.

Ein Vielfachzugriff auf den gleichen Kanal ist nur über genau koordinierten Zeitmultiplex möglich. Eine Ausweichmöglichkeit besteht in der Einführung zusätzlicher Kanäle, die aber den gleichen oben beschriebenen Einschränkungen unterworfen sind. In diese Richtung zielt auch ein Vorschlag von J. Gabel, "Elektro-Installationsnetz wird Informationsnetz", Aufsatz in etz, Bd. 104 (1983) Heft 1, der das Übertragungsband des Energieversorgungsnetzes in schmale Frequenzbereiche teilt, die als Übertragungskanäle genutzt werden sollen. Die Festlegung solcher Bereiche kann aufgrund der in jedem Netz vorhandenen selektiven Störungen und Dämpfungen nicht empfohlen werden, weil dadurch ein Teil der Übertragungskanäle für die Übertragung ausfällt.

Ein Ansatz, dieser Problematik zu begegnen, ist in der DE-OS 27 27 263 zu erkennen, in der ein Übertragungssystem beschrieben wird. Die Übertragungsfrequenzen liegen im Tonfrequenzbereich, also unter 20 kHz.

Diese Lösung ist insbesondere für schnelle Datenübertragungen unbefriedigend, weil der Bereich der Tonfrequenzen nur einen Bruchteil der verfügbaren Übertragungsbandbreite darstellt und solche Systeme als "schmalbandig" zu bezeichnen sind. Außerdem arbeiten Systeme gemäß der DE-OS 27 27 263 in einem Frequenzbereich, in dem elektrische Energieversorgungsnetze besonders mit Störungen vielfältiger Art und großer Amplitude belastet sind.

Aus der GB-A 2 094 598 ist eine Übertragungseinrichtung bekannt, die Signale über ein Energieversorgungsnetz überträgt. Zum Beispiel zur Fernablesung eines Meßgerätes erfolgt die Übertragung digitaler Signale mit Hilfe einer Bandspreizung auf der Grundlage von Chirp-Signalen, deren Frequenz über 15 kHz liegt. Die als Impulse übertragenen Chirp-Signale werden mit der zu übertragenden Nachricht moduliert. Zur Synchronisation benötigt man jedoch im Sender und Empfänger jeweils ein Rundfunkempfangsgerät, das zu einem relativ komplizierten Gesamtaufbau führt.

Der Erfindung liegt daher die Aufgabe zugrunde, Energieversorgungsnetze einer großen Anzahl von Übertragungseinrichtungen mit hoher Datenrate gleichzeitig nutzbar zu machen, wobei eine gute Resistenz gegen netzeigene Störungen und Dämpfungsüberhöhungen erreicht werden soll.

Diese Aufgabe wird durch die im Anspruch 1 gekennzeichneten Merkmale gelöst.

Die Nachricht wird bei der Bandspreizungstechnik über die gesamte verfügbare Übertragungsbandbreite verteilt, wodurch sich eine hohe Störungsunempfindlichkeit ergibt. Zwar ist ein erhöhter Aufwand für die Synchronisation sog. Spreizungsfunktionen erforderlich, die im Sender und Empfänger bei dieser Technik nötig sind, der Synchronisationsaufwand wird jedoch drastisch reduziert, wenn man erfindungsgemäß für alle Sender und Empfänger als gemeinsames Referenzsignal die Netzfrequenz verwendet.

Ein Ausführungsbeispiel der Erfindung ist in der Zeichnung dargestellt und nachfolgend im einzelnen erläutert.

Hierbei zeigen:
Figur 1
die Nutzung des für die Übertragung verwendeten Frequenzbereiches,
Figur 2
den schematischen Aufbau einer Nachrichtenübertragungseinrichtung und
Figur 3a bis 3d
eine Darstellung des Übertragungsvorganges anhand der zeitlichen Frequenzaufeinanderfolge.

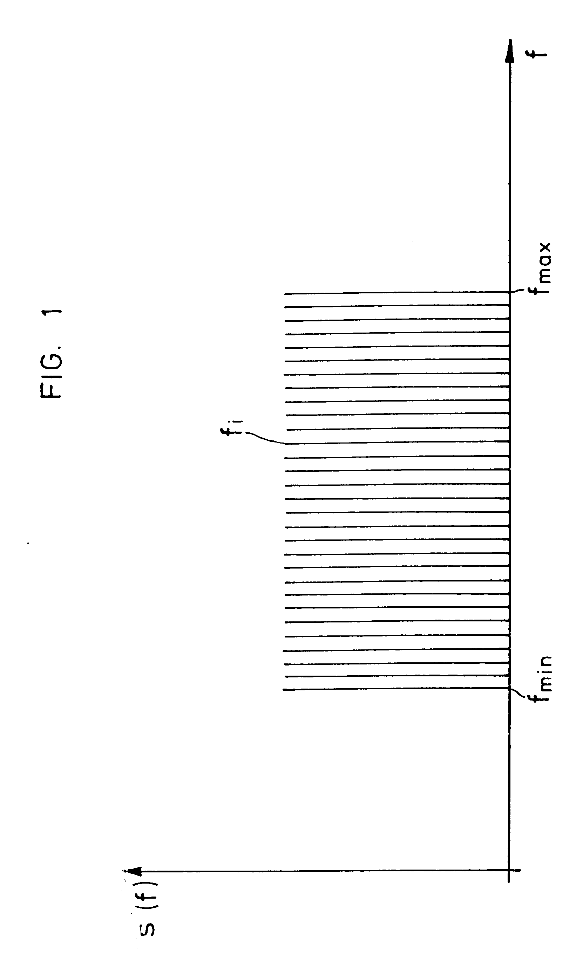

In Figur 1 ist in einem Diagramm die Nutzung des für die Übertragung verwendeten Frequenzbereiches gezeigt. Dieser Bereich ist über die Achse f in eine Vielzahl, hier z. B. 30, äquidistanter diskreter Frequenzen aufgeteilt. Die niedrigste Frequenz des Bereiches ist mit $f_{min}$, die höchste Frequenz mit $f_{max}$ bezeichnet. Zur Unterscheidung der einzelnen Frequenzen $f_i$ werden sie im folgenden durch einen Index i, i = 0, 1,....29 bezeichnet, wobei
$f_0 = f_{min}$ und $f_{29} = f_{max}$
ist.

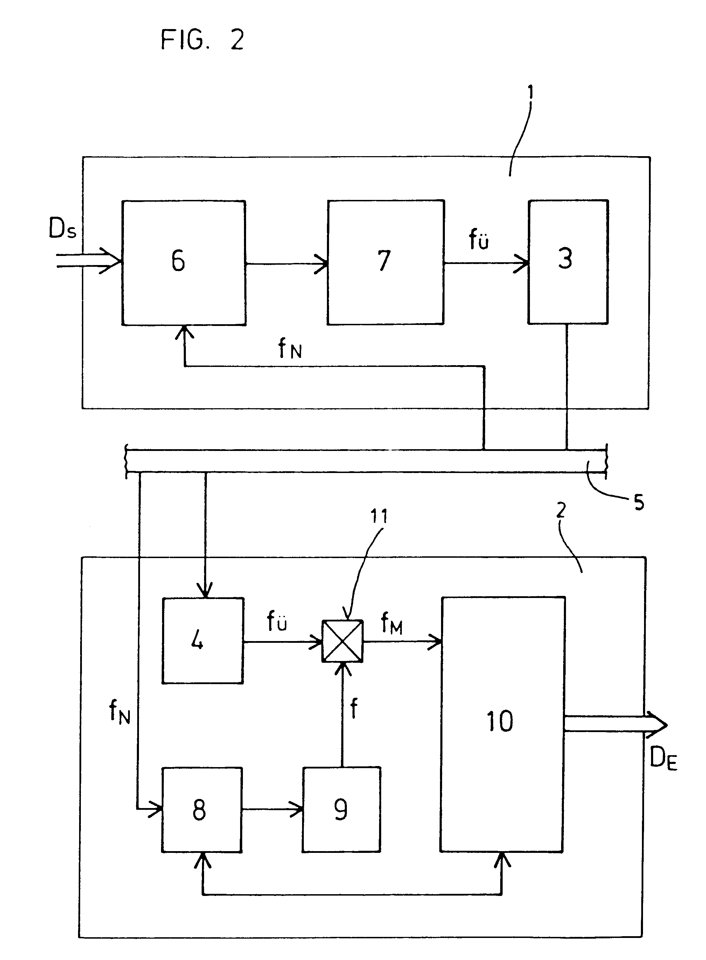

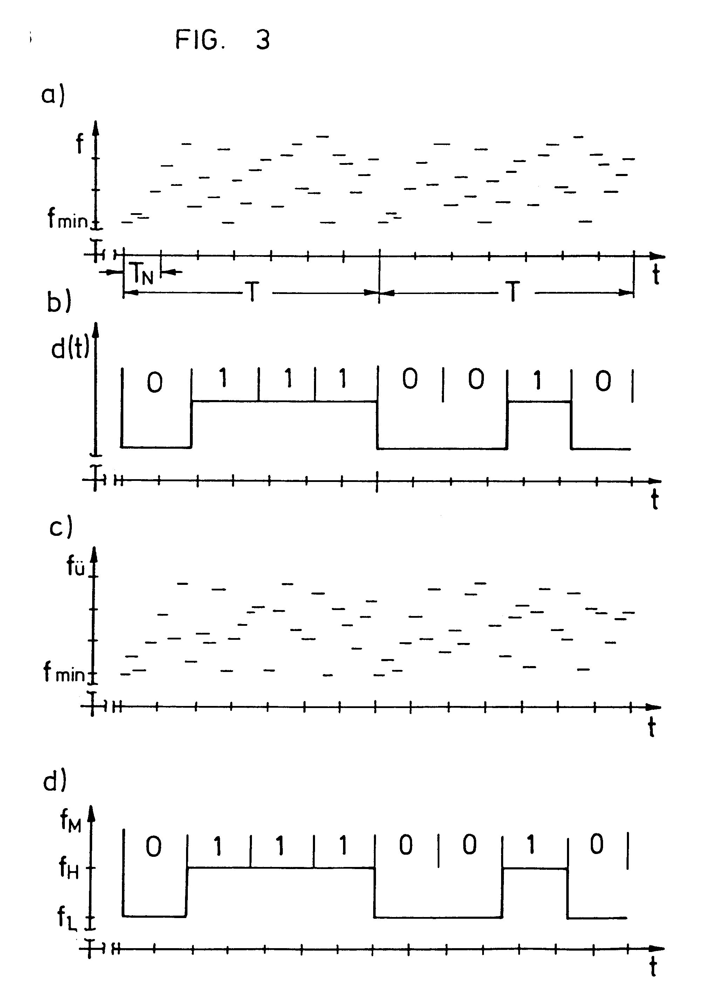

Figur 2 gibt beispielhaft den Aufbau einer erfindungsgemäß ausgebildeten Nachrichtenübertragungseinrichtung, bestehend aus einem Sender 1 und einem Empfänger 2 wieder. Die Einrichtung verwendet als Spreizungsfunktion zur spektralen Spreizung des zu sendenden Datensignals $D_S$ eine Pseudozufallsfolge, die aus 28 Zahlenwerten 1 bis 28 gebildet wird und die eine Dauer T hat, die der siebenfachen Netzperiode $T_N$ entspricht. Nach Maßgabe dieser Zahlen werden Frequenzen aus dem Übertragungsbereich für Übertragungen gewählt (siehe Figur 3a).

Im Synchronisations- und Datenmodulationsteil 6 des Senders 1 werden die Pseudozufallszahlen nach Maßgabe der Bits des Datensignals verändert. Diese Modulation bewirkt für das 0-Datenbit eine andere Frequenzverschiebung als für das 1-Datenbit. In Figur 3b ist beispielhaft ein Ausschnitt der Daten gezeigt und in Figur 3c die vom Frequenzgenerator 7 des Senders 1 erzeugten und über das Koppelelement 3 in das Netz 5 eingespeisten Übertragungsfrequenzen $f_{ü}$. In Figur 3c läßt sich die durch die Daten verursachte Abweichung der Sendefrequenzen $f_{ü}$ von den durch die Pseudozufallszahlen erzeugten Frequenzen gemäß Figur 3a erkennen.

Im Empfänger 2 können die Daten nur dann aus dem empfangenen Signal zurückgewonnen werden, wenn die im Sender 1 erfolgte Bandspreizung rückgängig gemacht wird. Dazu müssen im Empfänger die vom Frequenzgenerator 9 erzeugten Frequenzen wertmäßig und zeitlich so aufeinander folgen, daß durch das Mischen für das 1- und 0-Datenbit jeweils verschiedene aber konstante Frequenzen entstehen. Hierfür ist eine Synchronisation zwischen dem Sender 1 und dem Empfänger 2 notwendig. Diese Synchronisation gliedert sich in zwei Phasen. Zunächst muß einmalig eine Synchronisation erreicht werden. Dieser Vorgang heißt Akquisition. Für die Akquisition sind gewisse Strategien aus der Literatur bekannt. Die zweite Phase wird Tracking genannt und bezeichnet die Kontrolle, ob der Synchronismus eingehalten wird und die nötige Korrektur im Fehlerfall.

Dieser an sich aufwendige Vorgang wird besonders einfach, wenn erfindungsgemäß die Netzfrequenz als Referenz verwendet wird, wie es hier ausgeführt ist.

Akquisition und Tracking sind Aufgabe der Steuereinheit 8. Der Frequenzgenerator 9 des Empfängers 2 erzeugt periodisch Frequenzen gemäß Figur 3a. Das Ausgangssignal des Frequenzgenerators 9 wird mit dem über das Koppelelement 4 aus dem Netz zurückgewonnenen Signal in einem Mischer 11 gemischt. Im Ausgangssignal des Mischers 11 findet man, wenn die Synchronisation stimmt, die dem 0-Datenbit bzw. dem 1-Datenbit entsprechenden festen Frequenzen, wie in Figur 3 dargestellt. Das Ausgangssignal des Mischers 11 wird einem Datenrückgewinnungsteil 10 zugeführt, das die Daten $D_E$ ausgibt.

**Patentansprüche**

1. Verfahren zur Übertragung von Information über elektrische Energieversorgungsnetze, mit mindestens einem Sender und mindestens einem Empfänger, bei dem zur Übertragung schmalbandiger Nachrichtensignale unter spektraler Spreizung die Übertragungsbandbreite des Energieversorgungsnetzes oberhalb des Tonfrequenzbereiches verwendet wird, dadurch gekennzeichnet, daß jedem Sender und jedem Empfänger ständig die gesamte Übertragungsbandbreite zur Verfügung steht und ein Vielfachzugriff ermöglicht ist, daß die Synchronisation der Spreizungsfunktionen in Sender und Empfänger mit Hilfe der Netzwechselspannung bewerkstelligt wird, daß in einem Zeitraster, das ein Bit einer binären Nachricht in mehrere, vorzugsweise eine ungerade Anzahl, gleich langer Teile einteilt, Signale mit verschiedenen Frequenzen gesendet werden, und daß in den Empfängern im gleichen Zeitraster durch synchrones Mischen mit Signalen passender Frequenzen Signale mit für jeweils eine Nachrichtenbitdauer konstanter Frequenz erzeugt werden, wobei sich die Frequenzen für ein 0-Bit und ein 1-Bit unterscheiden.

2. Verfahren nach Anspruch 1, dadurch gekennzeichnet, daß die senderseitige spektrale Spreizung durch Beeinflussung eines Trägersignals nach Maßgabe einer Pseudozufallsfolge erreicht wird oder daß ein Signal großer Bandbreite in Form von Abtastwerten in einem digitalen Speicher abgelegt ist und von dort ausgelesen wird.

3. Verfahren nach einem der vorherigen Ansprüche, dadurch gekennzeichnet, daß die Erzeugung und Synchronisation der digitalen Spreizungsfunktionen in Sender und Empfänger sowie das Aufbringen digitaler Nachrichtensignale auf das Sendesignal mit Hilfe von hochintegrierten Halbleiterschaltungen, insbesondere Mikroprozessoren oder Einchip-Mikorcomputern, erfolgt.

4. Verfahren nach einem der vorherigen Ansprüche, dadurch gekennzeichnet, daß die n-fache Dauer der Spreizungsfunktion(en) genau der m-fachen Dauer einer sechstel Periode der Netzwechselspannung des Energieversorgungsnetzes entspricht, wobei n und m ganze Zahlen sind.

5. Verfahren nach einem der vorherigen Ansprüche, dadurch gekennzeichnet, daß manuell oder automatisch die zur Nachrichtenübertragung verwendeten Frequenzen so ausgewählt werden, daß der nachteilige Einfluß starker Störsignale und/oder von Dämpfungsüberhöhungen in der Übertragungsbandbreite ausgeschlossen wird.

## Claims

1. Method for transmitting information over electrical power supply networks having at least one transmitter and at least one receiver, in which the transmission bandwidth of the power supply network above the audio-frequency band is used for transmitting narrowband information signals using spectral spreading, characterised in that the entire transmission bandwidth is continuously available to each transmitter and to each receiver, and multiple access is made possible, in that the synchronisation of the spreading functions in the transmitter and receiver is effected using the network AC voltage, in that signals are transmitted at different frequencies in a time frame which splits one bit of a binary information item into a plurality, preferably an odd number, of parts of equal length, and in that signals which have a constant frequency in each case for the duration of one information bit are produced in the same time frame in the receivers by synchronous mixing with signals having matching frequencies, the frequencies differing for a 0-bit and a 1-bit.

2. Method according to Claim 1, characterised in that the spectral spreading at the transmitter end is achieved by influencing a carrier signal on the basis of a pseudo-random sequence, or in that a signal of large bandwidth is stored in a digital memory, in the form of sample values, and is read out from there.

3. Method according to one of the preceding claims, characterised in that the generation and synchronisation of the digital spreading functions in the transmitter and receiver, and the impression of the digital information signals on the transmission signal, are carried out using large-scale-integrated semiconductor circuits, especially microprocessors or single-chip microcomputers.

4. Method according to one of the preceding claims, characterised in that n-times the duration of the spreading function or functions corresponds precisely to m-times the duration of one sixth of the period of the network AC voltage of the power supply network, n and m being integers.

5. Method according to one of the preceding claims, characterised in that the frequencies used for information transmission are selected manually or automatically such that the disadvantageous influence of powerful interference signals and/or of damping overshoots in the transmission bandwidth is avoided.

## Revendications

1. Procédé pour la transmission d'informations (13) par l'intermédiaire de réseaux d'alimentation en énergie électrique, comportant au moins un émetteur et au moins un récepteur, dans lequel on utilise, pour la transmission par expansion spectrale de signaux de messages à bande étroite, la largeur de bande de transmission du réseau d'alimentation en énergie au-delà de la plage de fréquences audio, caractérisé par le fait que chaque émetteur et chaque récepteur dispose en permanence de l'ensemble de la largeur de bande de transmission et peut avoir un accès multiple, que l'on réalise la synchronisation de la fonction d'expansion dans l'émetteur et le récepteur à l'aide de la tension alternative du réseau, que l'on émet des signaux avec différentes fréquences dans une grille de temps qui divise un bit d'un message binaire en plusieurs parties, de préférence en un nombre impair de parties, de même longueur et que l'on produit dans les récepteurs, dans la même grille de temps, par mixage synchrone avec des signaux de fréquence adaptée, des signaux dont la fréquence est constante pour la durée d'un bit de message, les fréquences pour un bit "0" et pour un bit "1" étant différentes.

2. Procédé selon la revendication 1, caractérisé par le fait que l'on obtient l'expansion spectrale côté émetteur en agissant sur un signal porteur selon une séquence pseudo-aléatoire ou que l'on envoie dans une mémoire numérique un signal de grande largeur de bande se présentant sous la forme de valeurs de lecture et on le lit à partir de cette mémoire.

3. Procédé selon l'une des revendications précédentes, caractérisé par le fait que la production et la synchronisation des fonctions d'expansion numérique dans l'émetteur et dans le récepteur ainsi que l'application de signaux de message numériques sur le signal d'émission sont réalisées au moyen de circuits à semi-conducteurs à intégration poussée, en particulier de micro-processeurs ou d'ordinateurs mono-puces.

**4.** Procédé selon l'une des revendications précédentes, caractérisé par le fait que n fois la durée de la (des) fonction(s) d'expansion correspond exactement à m fois la durée d'un sixième de période de la tension alternative du réseau d'alimentation en énergie, n et m étant des nombres entiers.

**5.** Procédé selon l'une des revendications précédentes, caractérisé par le fait que l'on sélectionne manuellement ou de manière automatique les fréquences utilisées pour la transmission de message de manière telle que l'influence négative de signaux parasites de forte puissance et/ou de distorsions d'affaiblissement dans la largeur de bande de transmission soit supprimée.

FIG. 1

S(f)

$f_i$

$f_{min}$                    $f_{max}$

f

EP 0 200 016 B1

FIG. 2

# FIG. 3

a)

b)

c)

d)